Europäisches Patentamt

European Patent Office

Office européen des brevets

(19)

(11) Numéro de publication: **0 037 775**
**B1**

(12) **FASCICULE DE BREVET EUROPEEN**

(45) Date de publication du fascicule du brevet:
09.05.84

(51) Int. Cl.³: **A 01 C 7/04,** A 01 C 7/08

(21) Numéro de dépôt: **81400517.9**

(22) Date de dépôt: **31.03.81**

(54) Semoir à éjecteur pneumatique de graines, notamment pour cultures légumières.

(30) Priorité: **04.04.80 FR 8007775**

(43) Date de publication de la demande:
**14.10.81 Bulletin 81/41**

(45) Mention de la délivrance du brevet:
**09.05.84 Bulletin 84/19**

(84) Etats contractants désignés:
**DE FR GB IT NL**

(56) Documents cités:
**FR - A - 1 410 390**

(73) Titulaire: **NODET-GOUGIS Société anonyme dite:,
F-77130 Montereau (FR)**

(72) Inventeur: **Maury, Jean-Pierre, 10, rue Pierre Corneille,
F-77130 Montereau (FR)**

(74) Mandataire: **Phélip, Bruno et al, c/o Cabinet Harlé &
Phélip 21, rue de la Rochefoucauld, F-75009 Paris (FR)**

## Description

La présente invention concerne un semoir équipé d'un éjecteur pneumatique de graines.

L'invention s'applique plus particulièrement à un semoir destiné à semer des graines légères, tel que notamment un semoir à légumes.

Il est déjà connu, notamment du US-A No 1331235, d'éjecter pneumatiquement les graines hors du distributeur du semoir. Ce brevet américain divulgue un semoir pneumatique équipé d'un distributeur à disque perforé dont le système d'éjection des graines se compose d'un tube de soufflage débouchant derrière les trous transportant les graines et d'un entonnoir muni d'un conduit de guidage disposé devant lesdits trous et à l'opposé du tube de soufflage par rapport au disque. Les dimensions des trous du disque distributeur étant adaptées aux dimensions des graines à semer, ce dispositif d'éjection pneumatique connu présente des inconvénients lorsqu'il s'agit de semer des graines de petites dimensions telles que des graines de légumes. En effet, du fait de la petitesse des trous du disque distributeur, le souffle d'air traversant ceux-ci et accompagnant la graine jusqu'au sol manque de puissance et ne permet pas d'éjecter les graines avec suffisamment de force pour, notamment, les rendre insensibles à l'action du vent.

Un autre type d'éjecteur pneumatique est divulgué dans le FR-A No 1378012 qui décrit un distributeur mécanique à alvéoles associé à un pignon dont les dents repoussent les graines hors desdits alvéoles. L'éjecteur pneumatique divulgué dans ce brevet se compose essentiellement d'un tube cylindrique alimenté à une extrémité en air comprimé et muni latéralement d'une fenêtre d'entrée ménagée sous les alvéoles dans le pignon à l'intérieur du tube d'éjection et expulsées vers le sol par le flux d'air parcourant celui-ci. A l'intérieur du tube, la pression de l'air étant supérieure à la pression atmosphérique, un courant d'air de fuite s'échappe par la fenêtre à travers laquelle pénètrent les graines, si bien que ce dispositif ne peut convenir que sur des distributeurs munis d'organes destinés à repousser les graines à l'intérieur du tube, ou encore pour la distribution de graines dont le poids est suffisant pour qu'elles ne soient pas emportées par le courant d'air de fuite. Par contre, un tel éjecteur pneumatique ne peut convenir sur des distributeurs pneumatiques à disque perforé destinés aux semis de graines légères, car ces graines seraient refoulées par le courant d'air de fuite traversant la fenêtre et ne pourraient jamais pénétrer dans le tube d'éjection.

Le DE-C No 429529 décrit la combinaison d'un dispositif de distribution de graines à tambour rotatif, d'un venturi et de moyens de lâchage des graines à distance du col du venturi. Un tambour rotatif porte des dispositifs mécaniques de lâchage de graines qui passent en face d'un canal débouchant au niveau du col d'un venturi. Les graines sont amenées à l'extrémité d'un canal d'aspiration et sont alors relâchées. Comme un courant de fluide comprimé circule dans le convergent et dans le divergent du venturi, il existe un effet d'aspiration dans le canal latéral si bien que les graines, qui ont été libérées sans vitesse à l'extrémité externe du canal d'aspiration, sont progressivement aspirées et accélérées jusqu'au col du venturi. Ce système présente plusieurs inconvénients. D'abord, les graines sont libérées loin du col du venturi. La dépression créée par le venturi doit donc être transmise loin de celui-ci et nécessite donc une bonne étanchéité entre le venturi et le tambour cylindrique tournant. Cette étanchéité est obtenue difficilement étant donné qu'elle s'effectue suivant une surface cylindrique. Ensuite, l'entraînement des graines n'est pas très efficace étant donné que la force d'entraînement due au courant d'aspiration est relativement faible. Il faut en outre noter que, lorsque les graines sont libérées, elles n'ont pas de vitesse dans le sens d'aspiration et elles auraient même plutôt une composante de vitesse en sens opposé. Tous ces facteurs concourrent à la mauvaise fiabilité du système décrit dans ce brevet.

L'invention concerne donc un semoir à éjecteur pneumatique pouvant être utilisé en particulier pour les semis de graines légères telles que les graines de légumes.

Selon l'invention, un organe distributeur à disque perforé relâche les graines dans le col d'un venturi ou légèrement en aval de ce col, c'est-à-dire à un endroit où le courant gazeux du venturi a sa plus grande vitesse et entraîne donc les graines de la manière la plus sûre.

Plus précisément, l'invention concerne un semoir à éjecteur pneumatique destiné notamment au semis de graines légères telles que les graines de légumes, le semoir étant du type qui comporte un organe distributeur destiné à transporter les graines et comportant un disque perforé de distribution destiné à tourner devant une chambre d'aspiration placée d'un premier côté du disque et interrompue dans la zone de lâchage, des moyens pour libérer celles-ci dudit organe dans une zone de lâchage, et un dispositif d'éjection (FR-A No 1410390). La combinaison selon l'invention est telle que le dispositif d'éjection comporte un venturi d'éjection orienté vers le sol, accolé à l'autre côté du disque perforé et ayant un convergent, relié à une source de fluide comprimé, un col comportant un orifice d'entrée des graines transportées et maintenues par le disque, et un divergent, l'orifice formé dans le col ou à proximité de celui-ci se trouvant dans la zone de lâchage ou à proximité de celle-ci, le col du venturi étant en outre disposé par rapport à la chambre d'aspiration de manière que, lorsque les graines sont lâchées par le disque perforé, elles se trouvent déjà sensiblement dans le col du venturi ou en aval de ce col.

Dans un mode de réalisation avantageux, le divergent du venturi est divisé longitudinalement en plusieurs parties prolongées chacune par un conduit, et le disque perforé comporte plusieurs rangées circulaires de trous disposées de manière que les graines des diverses rangées soient libérées dans des parties différentes du divergent. Les extrémités des conduits les plus éloignées du col du venturi sont avantageusement décalées en direction transversale au plan du disque perforé, c'est-à-dire en direction transversale à la direction d'avance du semoir.

Dans un mode de réalisation particulier, le semoir comporte en outre un dispositif de réglage de l'orientation du venturi par rapport au sol. Ce dispositif règle la position avantageusement par rotation de la chambre d'aspiration et du venturi autour de l'axe de rotation du disque perforé. Ce réglage de l'orientation est de préférence effectué en fonction de la vitesse du semoir, afin que le vecteur somme de la vitesse du semoir et de la vitesse des graines projetées par le venturi soit perpendiculaire au sol.

Il est avantageux qu'un dispositif permette le réglage de la pression du fluide comprimé. En outre, c'est avantageusement un même dispositif qui constitue la source de fluide comprimé nécessaire au venturi et la source de vide assurant le fonctionnement de la chambre d'aspiration.

L'invention va maintenant être décrite plus en détail en se référant à des modes de réalisation particuliers cités à titre d'exemple non limitatif et représentés sur les dessins annexés sur lesquels:

la fig. 1 est une coupe longitudinale schématique d'un éjecteur selon l'invention monté sur un semoir pneumatique à disque perforé;

la fig. 2 est une coupe longitudinale de l'éjecteur de la fig. 1, suivant la ligne II-II;

la fig. 3 est une coupe schématique longitudinale d'une variante d'éjecteur selon l'invention, équipant un semoir pneumatique à disque perforé;

la fig. 4 est une coupe longitudinale d'un éjecteur double selon l'invention, monté sur un semoir pneumatique à disque perforé, et

la fig. 5 est une coupe longitudinale de l'éjecteur de la fig. 4, suivant la ligne V-V.

La description qui va suivre concerne un semoir pneumatique dont le distributeur de graines est constitué par un disque perforé rotatif sensiblement vertical accolé à une chambre d'aspiration qui s'interrompt dans une zone de lâchage des graines située de préférence au-dessous du niveau de l'axe de rotation du disque. Ce type de semoir monograine pneumatique à disque est décrit plus en détail notamment dans les FR-A N° 1208202, FR-A N° 1410390 et FR-A N° 1585445 dont les textes doivent être considérés comme faisant partie de la présente description.

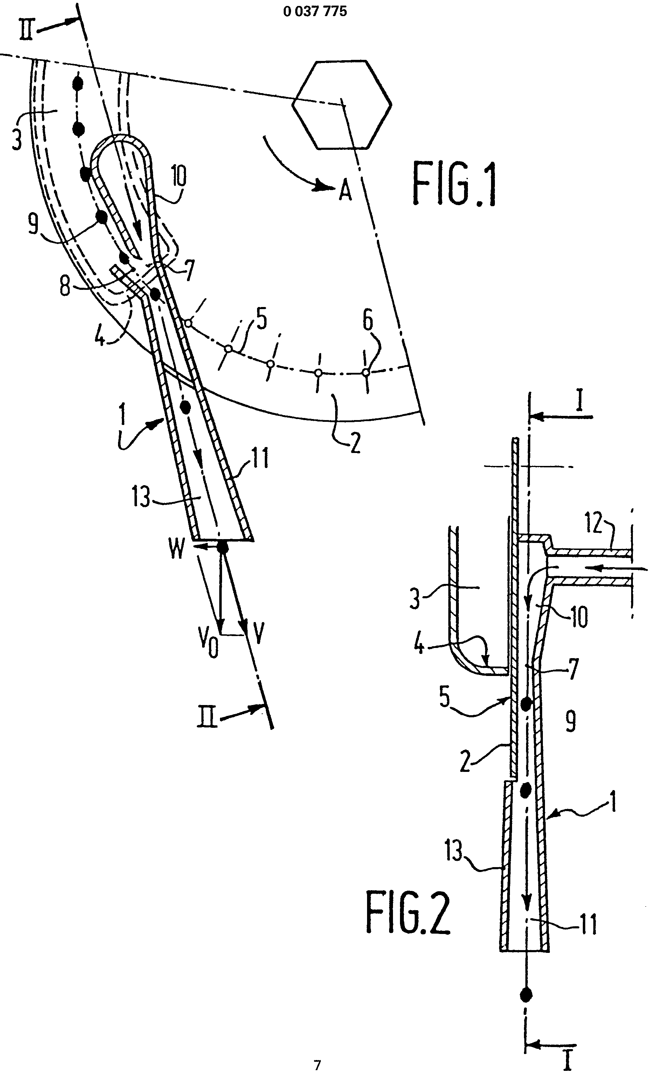

Tel que représenté sur les fig. 1 et 2, l'éjecteur pneumatique selon l'invention est essentiellement constitué par un venturi 1 accolé à une face d'un disque perforé 2 d'un distributeur pneumatique dont la chambre d'aspiration 3, située derrière le disque, est interrompue dans la zone de lâchage des graines. Telle que représentée en traits interrompus sur la fig. 1, la chambre d'aspiration 3 comporte une paroi d'extrémité 4 orientée radialement en travers de la trajectoire circulaire 5 des trous d'aspiration 6 du disque 2 et située sensiblement en regard du col 7 du venturi situé de l'autre côté du disque.

La zone de lâchage des graines se situe à l'endroit où la paroi d'extrémité 4 de la chambre d'aspiration 3 coupe la trajectoire 5 des trous 6, lesquels, au-delà dudit endroit, ne circulent plus devant une zone en dépression, mais dans une zone soumise à la pression atmosphérique, ce qui évidemment interrompt la succion et libère les graines. Dans ladite zone de lâchage, c'est-à-dire en regard de l'extrémité 4 de la chambre d'aspiration 3, la paroi du col 7 du venturi 1 comporte une ouverture d'entrée 8 située à cheval sur la trajectoire 5 des trous 6 de transport des graines 9, de telle sorte que lesdites graines, entraînées par le disque distributeur 2, puissent pénétrer à l'intérieur du venturi 1 qui est accolé à la face du disque 2 supportant lesdites graines.

Le venturi comporte évidemment, de manière connue en soi, un convergent 10 prolongé par un divergent 11, ce convergent 10 étant relié par un conduit 12 (voir fig. 2) à une source de fluide comprimé non représentée. En particulier, le convergent 10 peut être alimenté par l'air qui est refoulé hors de la chambre d'aspiration 3 pour maintenir l'intérieur de ladite chambre en dépression.

Comme on peut le voir sur les fig. 1 et 2, la moitié supérieure du venturi 1 ne comporte pas de parois fixes arrière et s'ouvre face au disque de distribution 2 qui constitue une véritable paroi arrière mobile pour le convergent 10, pour la zone du col 7 où se situe l'entrée 8 des graines et pour la partie haute du divergent 11 dont la partie basse est fermée vers l'arrière par une paroi fixe 13.

L'ensemble distributeur (chambre d'aspiration et venturi) est prévu orientable autour de l'axe de rotation du disque 2.

De cette manière, il est possible de modifier à volonté l'orientation du venturi en direction du sol.

Tel que représenté sur la fig. 1, le venturi 1 est positionné en travers de la trajectoire circulaire 5 des graines avec son convergent 10 situé à l'intérieur du cercle des trous 6 et son divergent s'étendant à l'extérieur de celui-ci, l'intersection avec la trajectoire des graines se situant sensiblement au niveau du col 7 et l'orifice d'entrée 8 des graines s'ouvrant du côté opposé à l'axe du disque.

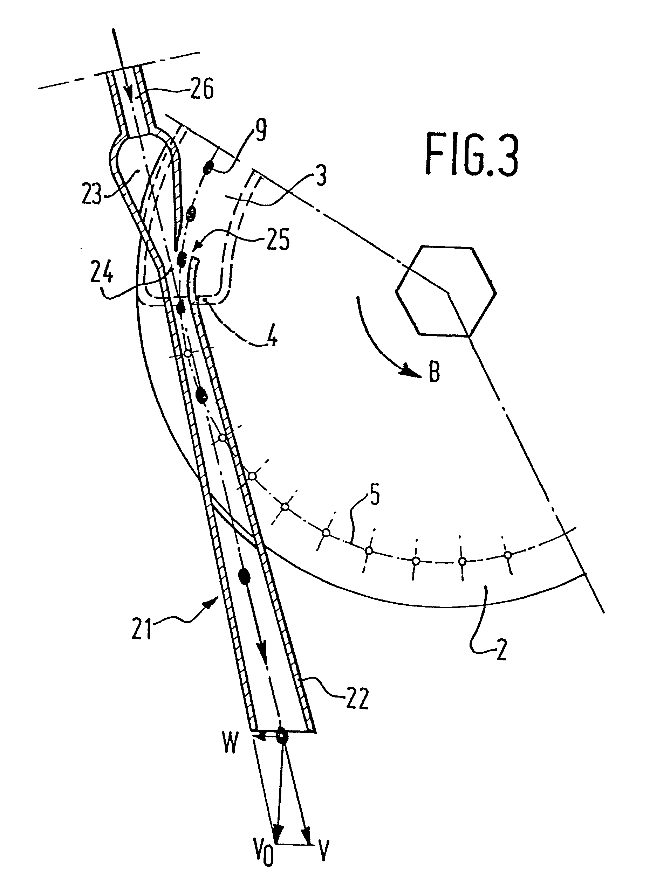

Dans une variante représentée sur la fig. 3, le venturi d'éjection 21 selon l'invention est disposé sensiblement tangentiellement à la trajectoire 5 des trous du disque distributeur 2 tel qu'à la fois le divergent 22 et le convergent 23 du venturi s'étendent tous deux à l'extérieur de ladite trajectoire circulaire 5 des graines. Le point de tangence de l'axe du venturi et de la trajectoire 5 des graines se situe légèrement en aval du col 24 du venturi, à la naissance du divergent 22, et un orifice d'entrée 25 des graines s'ouvre du côté de l'axe du disque 2, sensiblement à cheval sur le trajet des graines 9 transportées. Comme précédemment, le col 24 du venturi et l'ouverture 25 sont positionnés dans la zone de lâchage des graines, c'est-à-dire sensiblement face à la paroi d'extrémité 4 de la chambre d'aspiration du distributeur, cette paroi étant représentée en traits discontinus sur la fig. 3. Le convergent 23 du venturi 21 est alimenté en air comprimé par un conduit 26 aligné sur l'axe du venturi qu'il prolonge vers le haut, l'absence de coude à l'entrée du convergent réduisant les pertes de charge. La moitié supérieure du divergent 22 ainsi que la partie inférieure du convergent 23 ne comportent pas de parois arrière fixes et sont ouvertes face au disque distributeur 2 qui constitue une véritable paroi arrière mobile.

Les semoirs à éjecteur pneumatique décrits précédemment fonctionnent de la manière suivante.

En cours de fonctionnement, les disques distributeurs perforés tournent dans le sens inverse des aiguilles d'une montre, tel que suggéré par les flèches A et B des fig. 1 et 3, et les convergents 10 et 23 des venturis 1 et 21 respectivement sont alimentés en air comprimé dont les courants sont schématisés par des flèches sur les figures. Les flux d'air comprimé s'accélèrent au niveau des cols 7 et 24 des venturis et prennent une vitesse extrêmement élevée au niveau des orifices d'entrée 8 et 25 des graines 9 transportées par le disque 2 de distribution. Comme la chambre d'aspiration du distributeur est interrompue au niveau du col ou légèrement en aval de celui-ci, les graines sont libérées des disques transporteurs et littéralement happées par le courant d'air comprimé à grande vitesse provenant des convergents des venturis, complété par l'air aspiré par les orifices 8 et 25 d'entrée des éjecteurs. Les graines sont ainsi propulsées dans les divergents 11 et 22 en direction du sol.

Du fait du déplacement du semoir par rapport au sol, les graines sortant des venturis sont soumises à l'action d'une composante de vitesse horizontale W qui se combine à l'action d'une composante de vitesse V dirigée suivant l'axe du venturi. Ainsi, en agissant sur la pression de l'air comprimé introduit dans les convergents des venturis et sur l'orientation de ceux-ci par rapport à la verticale ou bien sur les deux à la fois, on peut obtenir une composante de vitesse résultante Vo sensiblement perpendiculaire au sol, si bien que la graine éjectée est dirigée perpendiculairement à la terre du sillon et ne risque pas de rebondir ou de rouler.

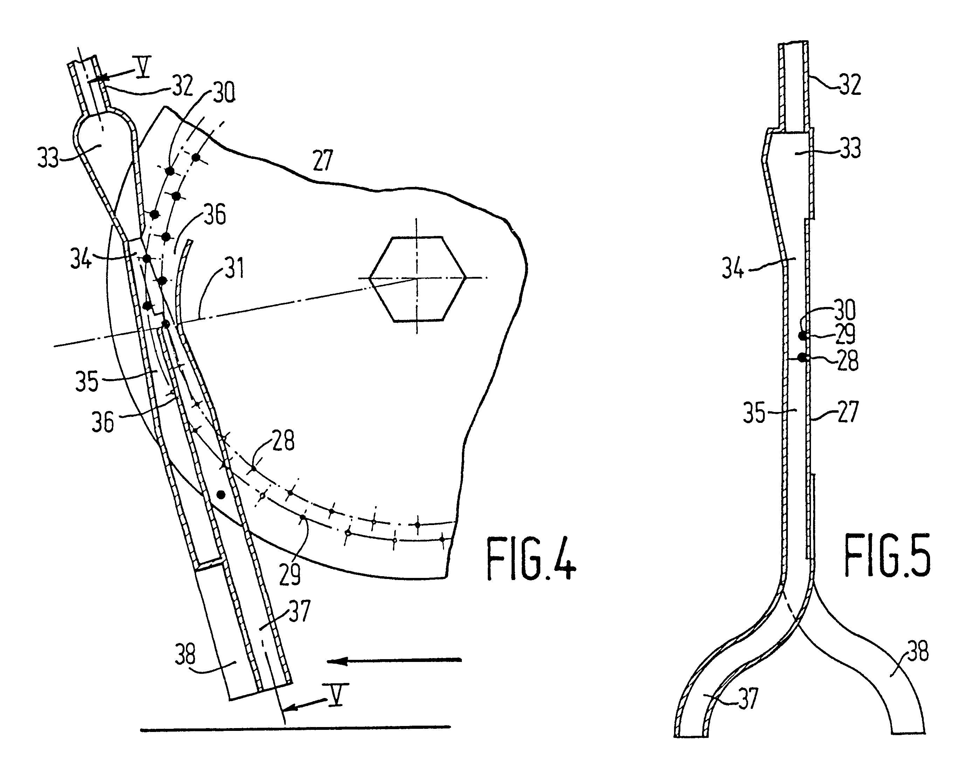

Les fig. 4 et 5 représentent un mode de réalisation de semoir selon l'invention dans lequel le venturi est double.

Plus précisément, le semoir comporte un disque perforé 27 qui a deux rangées circulaires de trous 28 et 20, placées en face d'une chambre d'aspiration, si bien que des graines 30 peuvent être retenues par le disque. La chambre d'aspiration, non représentée, se prolonge jusqu'à l'axe repéré par la référence 31.

Le venturi reçoit de l'air comprimé par une tubulure 32 d'entrée et il comporte un convergent 33, un col 34 et un divergent 35.

Dans ce mode de réalisation, le divergent 35 est divisé longitudinalement en deux parties par une cloison 36 qui délimite ainsi deux canaux de circulation dans le divergent. Ces deux canaux de circulation se prolongent par des conduits 37 et 38, plus clairement représentés sur la fig. 5.

Les autres caractéristiques sont analogues à celles des semoirs décrits précédemment en référence aux fig. 1 à 3.

Lors du fonctionnement, chacune des deux rangées 28, 29 de trous amène les graines à l'entrée de l'un des deux canaux du divergent 35, si bien que les graines sont libérées lorsqu'elles sont déjà engagées dans l'un ou l'autre des deux canaux ou juste avant de s'y engager. De cette manière, le semoir permet, avec un seul disque perforé, le semis dans deux sillons parallèles.

Bien entendu, bien qu'on ait décrit un mode de réalisation ne comportant que deux rangées parallèles, on peut en utiliser un plus grand nombre. De cette manière, un seul disque perforé peut distribuer les graines plantées dans plusieurs sillons parallèles.

Comme on peut le constater d'après ce qui a été décrit ci-dessus, l'éjecteur pneumatique selon l'invention permet le semis de graines légères grâce au fait que lesdites graines sont littéralement aspirées à l'intérieur de l'éjecteur avant d'être poussées par le flux d'air comprimé traversant celui-ci. La zone dépressionnaire créée au col des venturis évite la formation d'un courant d'air de fuite vers l'extérieur susceptible d'empêcher la pénétration des graines dans l'éjecteur.

Bien entendu, la portée de l'invention n'est pas limitée au seul mode de réalisation décrit ci-dessus à titre d'exemple non limitatif, mais elle couvre également toutes les variantes qui ne différeraient que par des détails de construction.

## Revendications

1. Semoir à éjecteur pneumatique, destiné notamment au semis de graines légères telles que des graines de légumes, ledit semoir comprenant un organe distributeur destiné à transporter les graines et comportant un disque perforé (2) de distribution destiné à tourner devant une chambre d'aspiration (3) placée d'un premier côté du disque (2) et interrompue dans la zone de lâchage, des moyens pour libérer les graines de l'organe distributeur dans la zone de lâchage, et un dispositif d'éjection, ledit semoir étant caractérisé en ce que le dispositif d'éjection comporte un venturi (1) d'éjection orienté vers le sol, accolé à l'autre côté du disque (2) de distribution et dont le convergent est relié à une source de fluide comprimé, le col (7) du venturi comportant un orifice (8) d'entrée des graines transportées et maintenues par le disque (2) de distribution, l'orifice (8) étant placé dans la zone de lâchage ou à proximité de celle-ci, et le col (7) du venturi étant disposé, par rapport à la chambre d'aspiration (3), de manière que, lorsque les graines sont lâchées par le disque (2) de distribution, elles se trouvent déjà sensiblement dans le col (7) du venturi ou en aval de ce col.

2. Semoir selon la revendication 1, caractérisé en ce que le divergent (35) du venturi est divisé longitudinalement en plusieurs parties prolongées chacune par un conduit (37, 38), et le disque perforé comporte plusieurs rangées circulaires de trous (28, 29) disposées de manière que les graines des diverses rangées soient libérées dans des parties différentes du divergent.

3. Semoir selon la revendication 2, caractérisé en ce que les extrémités des conduits (37, 38) les plus éloignées du col du venturi sont décalées en direction perpendiculaire au plan du disque perforé.

4. Semoir selon l'une des revendications 1 à 3, caractérisé en ce qu'il comprend en outre un dispositif de réglage de l'orientation du venturi par rapport au sol.

5. Semoir selon la revendication 4, caractérisé en ce que le dispositif de réglage de l'orientation du venturi par rapport au sol règle la position de celui-ci par rotation de la chambre d'aspiration (3) et du venturi (1) autour de l'axe de rotation du disque (2).

6. Semoir selon l'une des revendications 4 ou 5, caractérisé en ce que le dispositif de réglage de l'orientation du venturi règle ce dernier en fonction de la vitesse du semoir, afin que le vecteur somme de la vitesse du semoir et de la vitesse des graines projetées par le venturi soit perpendiculaire au sol.

7. Semoir selon l'une des revendications 1 à 6, caractérisé en ce qu'il comporte un dispositif de réglage de la pression du fluide comprimé.

8. Semoir selon l'une des revendications précédentes, caractérisé en ce qu'il comporte un dispositif constituant à la fois la source de fluide comprimé du venturi et la source de vide assurant le fonctionnement de la chambre d'aspiration (3).

**Patentansprüche**

1. Sämaschine mit pneumatischem Ejektor, insbesondere für das Säen von leichten Samenkörnern wie Gemüsesamen, wobei die Sämaschine ein Verteilerorgan, das zum Transportieren der Samenkörner bestimmt ist und eine gelochte Verteilerscheibe (2) umfasst, die dazu bestimmt ist, sich vor einer Saugkammer (3) zu drehen, die an einer ersten Seite der Scheibe (2) angeordnet und in dem Freigabebereich unterbrochen ist, Mittel zum Freimachen der Samenkörner von dem Verteilerorgan in dem Freigabebereich und eine Ejektorvorrichtung aufweist, wobei die Sämaschine dadurch gekennzeichnet ist, dass die Ejektorvorrichtung ein Venturirohr (1) zum Auswerfen, das auf den Boden gerichtet, auf der anderen Seite der Verteilerscheibe (2) befestigt und dessen konvergierender Teil mit einer Druckfluidquelle verbunden ist, wobei der Hals (7) des Venturirohrs eine Eintrittsöffnung (8) für die von der Verteilerscheibe (2) transportierten und gehaltenen Samenkörner aufweist, wobei die Öffnung (8) in dem Freigabebereich oder benachbart hiervon angeordnet ist, und der Hals (7) des Venturirohrs in bezug auf die Saugkammer (3) derart angeordnet ist, dass dann, wenn die Samenkörner durch die Verteilerscheibe (2) freigegeben werden, sie sich bereits im wesentlichen in dem Hals (7) des Venturirohrs oder stromaufwärts von diesem Hals befinden.

2. Sämaschine nach Anspruch 1, dadurch gekennzeichnet, dass der divergierende Abschnitt (35) des Venturirohrs in Längsrichtung in mehrere Teile unterteilt ist, die jeweils durch eine Leitung (37, 38) verlängert sind, und die gelochte Scheibe mehrere kreisförmige Reihen von Löchern (28, 29) aufweist, die derart angeordnet sind, dass die Samenkörner aus verschiedenen Reihen in verschiedene Teile des divergierenden Abschnitts freigegeben werden.

3. Sämaschine nach Anspruch 2, dadurch gekennzeichnet, dass die vom Hals des Venturirohrs am weitesten entfernten Enden der Leitungen (37, 38) in Richtung senkrecht zur Ebene der perforierten Scheibe versetzt sind.

4. Sämaschine nach einem der Ansprüche 1 bis 3, dadurch gekennzeichnet, dass sie zusätzlich eine Vorrichtung zum Einstellen der Orientierung des Venturirohrs in bezug auf den Boden aufweist.

5. Sämaschine nach Anspruch 4, dadurch gekennzeichnet, dass die Vorrichtung zum Einstellen der Orientierung des Venturirohrs in bezug zum Boden die Position hiervon durch Drehen der Saugkammer (3) und des Venturirohrs (1) um die Drehachse der Scheibe (2) reguliert.

6. Sämaschine nach einem der Ansprüche 4 oder 5, dadurch gekennzeichnet, dass die Vorrichtung zum Einstellen der Orientierung des Venturirohrs letzteres als Funktion der Geschwindigkeit der Sämaschine einstellt, damit die Vektorsumme aus der Sämaschinengeschwindigkeit und der Geschwindigkeit der Samenkörner, die durch das Venturirohr ausgestossen werden, senkrecht zum Boden ist.

7. Sämaschine nach einem der Ansprüche 1 bis 6, dadurch gekennzeichnet, dass sie eine Vorrichtung zum Regeln des Drucks des Druckfluids umfasst.

8. Sämaschine nach einem der vorhergehenden Ansprüche, dadurch gekennzeichnet, dass sie eine Vorrichtung umfasst, die sowohl die Druckfluidquelle für das Venturirohr als auch die Unterdruckquelle bildet, die die Funktion der Saugkammer (3) sicherstellt.

**Claims**

1. Seed drill with a pneumatic ejector, intended particularly for sowing light seeds such as vegetable seeds, the said seed drill comprising a distributor device intended to convey the seeds and comprising a perforated distribution disc (2) intended to rotate in front of a suction chamber (3) placed on a first side of the disc (2) and interrupted in the dropping zone, means for releasing the seeds from the distributor device into the dropping zone, and an ejection device, the said seed drill being characterised in that the ejection device comprises an ejection venturi (1) directed towards the ground, coupled to the other side of the distribution disc (2) and whose converging part is connected to a source of compressed fluid, the throat (7) of the venturi comprising an orifice (8) for the entry of the seeds conveyed and held by the distribution disc (2), the orifice (8) being placed in the dropping zone or close to the latter, and the throat (7) of the venturi is arranged relative to the suction chamber (3) in such a manner that, when the seeds are dropped by the distribution disc (2), they are already substantially in the throat (7) of the venturi or downstream thereof.

2. Seed drill according to Claim 1, characterised in that the diverging part (35) of the venturi is divided lengthwise into several parts each extended by a duct (37, 38), and the perforated disc comprises several circular rows of holes (28, 29) arranged so that the seeds from different rows are released into different parts of the diverging part.

3. Seed drill according to Claim 2, characterised in that the ends of the ducts (37, 38) which are furthest from the throat of the venturi are offset in a direction at right angles to the plane of the perforated disc.

4. Seed drill according to any one of Claims 1 to 3, characterised in that it additionally comprises a device for controlling the direction of the venturi relative to the ground.

5. Seed drill according to Claim 4, characterised in that the device for controlling the direction of the venturi relative to the ground controls the position of the venturi by rotating the suction chamber (3) and the venturi (1) around the axis of rotation of the disc (2).

6. Seed drill according to Claim 4 or 5, characterised in that the device for controlling the direction of the venturi controls the latter as a function of the speed of the seed drill in order that the vector sum of the speed of the seed drill and of the speed of the seeds projected by the venturi should be at right angles to the ground.

7. Seed drill according to any one of Claims 1 to 6, characterised in that it comprises a device for controlling the pressure of the compressed fluid.

8. Seed drill according to any one of the preceding claims, characterised in that it comprises a device forming both the source of the compressed fluid in the venturi and the source of vacuum responsible for the operation of the suction chamber (3).

0 037 775

FIG.1

FIG.2

7

FIG.3

FIG.4

FIG.5